# FASCICULE DE BREVET EUROPEEN

(11) **EP 0 467 771 B1**
(45) Date de publication et mention de la délivrance du brevet: **02.11.1994**
(21) Numéro de dépôt: 91401975.7
(22) Date de dépôt: 16.07.1991
(51) Int. Cl.: F16D 65/04, F16D 49/08, B23P 15/18, F16H 63/30

(54) **Dispositif d'attache d'un frein à bande**
Befestigungsvorrichtung einer Bandbremse
Brake band fastening device

(30) Priorité: 17.07.1990 FR 9009103
(43) Date de publication de la demande: 22.01.1992
(73) Titulaire: REGIE NATIONALE DES USINES RENAULT S.A., 92109 Boulogne Billancourt (FR)
(72) Inventeur: Buannec, Michel, F-92000 Nanterre (FR)

(56) Documents cités:
- DE-A- 3 132 639
- GB-A- 1 192 978

## Description

La présente invention se rapporte à un dispositif d'attache d'un frein à bande, qui se monte plus particulièrement sur une boîte de vitesses automatique d'un véhicule automobile de tourisme.

On connaît des dispositifs d'attache de frein à bande qui utilisent deux pions de tenue emmanchés à force dans le carter supportant l'ensemble du dispositif de frein à bande. Ces deux pions coopèrent avec des encoches aménagées sur ledit frein à bande.

L'inconvénient de tels dispositifs est qu'il apparaît après une certaine usure, un déplacement du frein à bande sur ses pions dû au frottement. On a alors un risque de mauvais appui et de mauvais positionnement dudit frein à bande.

Le but de la présente invention est de proposer un dispositif d'attache d'un frein à bande, notamment pour une boîte de vitesses automatique, qui est aménagé de manière à s'adapter aux différentes positions de l'extrémité dudit frein à bande, afin d'obtenir un appui sans déplacement relatif de l'un par rapport à l'autre.

Conformément à l'invention, ce problème est résolu en réalisant un dispositif d'attache d'un frein à bande, caractérisé
- en ce que l'extrémité de la bande du frein une première face sensiblement radiale par rapport au tambour de frein et une seconde face orientée sensiblement selon la circonférence du tambour, et
- en ce qu'il comporte une bielle de réaction montée dans le carter dudit frein au moyen d'un axe, la bielle présentant d'une part deux faces d'appui orientées sensiblement radialement par rapport au tambour de manière à appliquer une réaction sur la première face de l'extrémité de la bande du frein, et d'autre part une talonnette, dont le plan passe par l'axe de rotation de la bielle, de manière à transmettre un couple de réaction à la seconde face de l'extrémité de la bande du frein.

Le dispositif d'attache du frein à bande selon l'invention, présente ainsi l'avantage d'offrir un système à rattrapage de jeu automatique, et qui s'adapte aux différentes positions de l'extrémité du frein, afin d'obtenir un appui n'ayant aucun déplacement relatif, l'un par rapport à l'autre.

D'autres caractéristiques et avantages de la présente invention ressortiront de la description qui suit le mode de réalisation donné à titre d'exemple, en référence aux dessins annexés, sur lesquels :
- la figure 1 est une coupe transversale de l'ensemble du dispositif d'attache d'un frein à bande selon l'invention;
- la figure 2 est une vue en perspective du frein à bande;
- la figure 3 est une vue en perspective de la bielle de réaction selon l'invention.

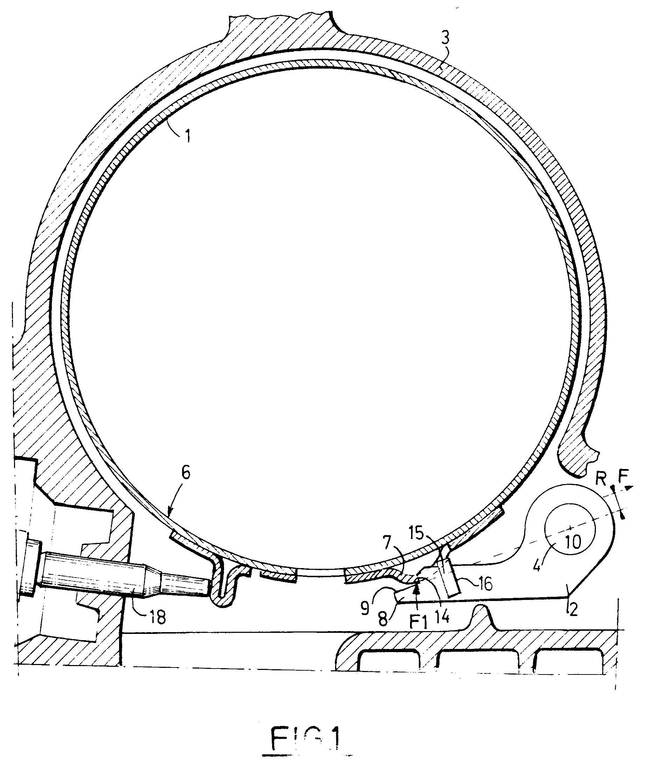

Le dispositif d'attache d'un frein à bande 1 selon l'invention, est représenté sur la figure 1. Ce frein à bande est monté sur une boîte de vitesses automatique et il est commandé par un vérin 18. L'ensemble du dispositif est disposé dans un carter 3.

Selon l'invention, une bielle de réaction 2 est montée dans le carter 3 au moyen d'un axe 4.

La bielle de réaction selon l'invention a :
- deux faces d'appui 14 qui sont orientées sensiblement radialement par rapport au tambour 6 du frein à bande 1, de manière à avoir une réaction sur l'extrémité 7 de la bande du frein 1;
- et une talonnette 8 qui transmet le couple de réaction à l'extrémité 7 de la bande par sa face supérieure 9, dont le plan passe par l'axe de rotation 10 de ladite bielle de réaction 2, de manière à avoir la garantie d'obtenir un couple de basculement ou de réaction, que génère la force d'action F₁ de la talonnette 8 sur le frein à bande 1. Cette force d'action F₁ est donnée par l'action F de réaction du frein à bande 1 sur les deux faces d'appui 14, à une distance R de l'axe de rotation 10.

La bielle de réaction 2 est constituée par un moyeu 11 qui est monté sur l'axe 4. Ce moyeu 11 se prolonge par un bras 12, dont l'extrémité 13 possède un décrochement de manière à avoir la face d'appui 9 de la talonnette 8.

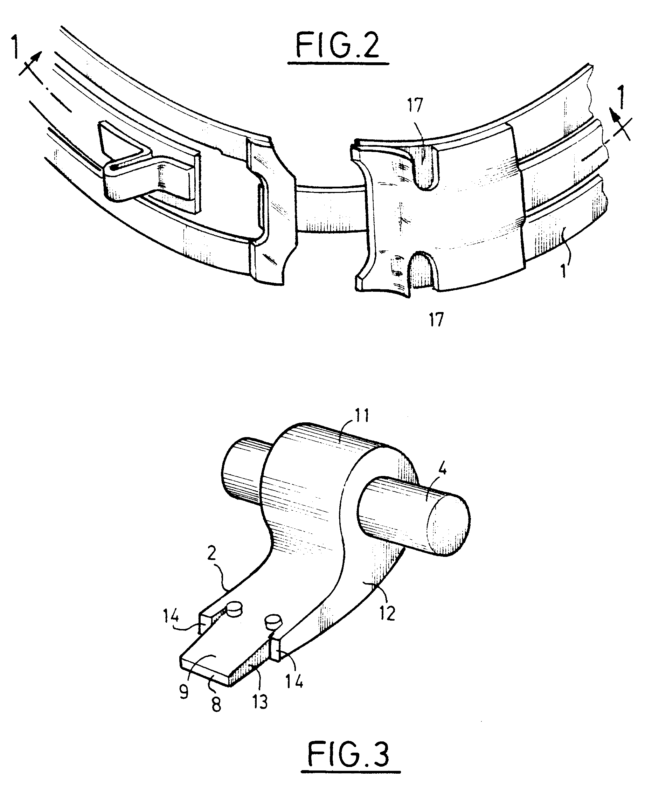

Comme on peut le voir sur la figure 3, l'extrémité 13 du bras 12 de la bielle de réaction 2 est constitué par deux faces d'appui 14, qui sont disposées de part et d'autre d'une languette. Cette languette se prolonge en avant des faces d'appui 14, et elle constitue la talonnette 8.

La bielle de réaction 2 comporte des pions de positionnement 15 du frein à bande 1. Ces pions de positionnement 15 coopèrent avec des encoches 17 qui sont aménagées dans le frein à bande 1, comme on peut le voir sur la figure 2. Les pions de positionnement 15 sont montés dans des logements 16, qui sont aménagés dans le bras 12 de la bielle de réaction 2.

## Revendications

1. Dispositif d'attache d'un frein à bande, caractérisé
- en ce que l'extrémité de la bande du frein (1) présente une première face sensiblement radiale par rapport au tambour de frein et une seconde face orientée sensiblement selon la circonférence du tambour, et
- en ce qu'il comporte une bielle de réaction (2) montée dans le carter (3) dudit frein au moyen d'un axe (4), la bielle (2) présentant d'une part deux faces d'appui (14) orientées sensiblement radialement par rapport au tambour (6) de manière à appliquer une réaction sur la première face de l'extrémité de la bande du frein (1), et d'autre part une talonnette (8), dont le plan passe par l'axe de rotation (10) de la bielle (2), de manière à transmettre un couple de réaction à la seconde face de l'extrémité de la bande du frein (1).

2. Dispositif d'attache selon la revendication 1, caractérisé en ce que la bielle de réaction (2) est constituée par un moyeu (11) monté sur l'axe (4), ledit moyeu (11) se prolongeant par un bras (12) dont l'extrémité (13) possède un décrochement, de manière à avoir la face d'appui (9) de la talonnette (8).

3. Dispositif d'attache selon la revendication 2, caractérisé en ce que l'extrémité (13) du bras (12) de la bielle de réaction (2) est constituée par deux faces d'appui (14) disposées de part et d'autre d'une languette qui se prolonge en avant desdites faces d'appui (14) et qui constituent la talonnette (8).

4. Dispositif d'attache selon la revendication 1, caractérisé en ce que la bielle de réaction (2) comporte des pions de positionnement (15) du frein à bande (1), qui coopèrent avec des encoches (17) aménagées dans ledit frein à bande (1).

5. Dispositif d'attache selon les revendications 2 et 4, caractérisé en ce que les pions de positionnement (15) sont montés dans des logements (16) aménagés dans le bras (12) de la bielle de réaction (2).

6. Dispositif d'attache selon l'une des revendications précédentes, caractérisé en ce que le frein à bande est monté sur une boîte de vitesses automatique et est commandé par un vérin (18).

## Claims

1. A band brake fastening device, characterised
- in that the end of the band of the brake (1) has a first surface which is substantially radial with respect to the brake drum and a second surface oriented substantially with respect to the periphery of the drum, and
- in that it comprises a feedback rod (2) mounted in the casing (3) of the brake by means of a shaft (4), the rod (2) comprising, on the one hand, two bearing surfaces (14) oriented substantially radially with respect to the drum (6) so as to apply a feedback to the first surface of the end of the band of the brake (1) and, on the other hand, a heel (8) whose plane passes through the axis of rotation (10) of the rod (2) so as to transmit a feedback torque to the second surface of the end of the band of the brake (1).

2. A fastening device as claimed in claim 1, characterised in that the feedback rod (2) is formed by a hub (11) mounted on the shaft (4), this hub (11) being extended by an arm (12) whose end (13) comprises a crank so as to provide the bearing surface (9) of the heel (8).

3. A fastening device as claimed in claim 2, characterised in that the end (13) of the arm (12) of the feedback rod (2) is formed by two bearing surfaces (14) disposed on either side of a tongue which extends in front of these bearing surfaces (14) and which forms the heel (8).

4. A fastening device as claimed in claim 1, characterized in that the feedback rod (2) comprises positioning pins (15) for the band brake (1) which cooperate with slots (17) provided in the band brake (1).

5. A fastening device as claimed in claims 2 and 4, characterised in that the positioning pins (15) are mounted in housings (16) provided in the arm (12) of the feedback rod (2).

6. A fastening device as claimed in one of the preceding claims characterised in that the band brake is mounted on an automatic gearbox and is controlled by a jack (18).

## Patentansprüche

1. Befestigungsvorrichtung für eine Bandbremse, dadurch gekennzeichnet, daß
- das Ende der Bandbremse (1) eine erste Fläche aufweist, die im wesentlichen radial bezüglich der Bremstrommel ist und eine zweite Fläche aufweist, die im wesentlichen entlang des Umfangs der Trommel verläuft und
- daß sie ein Reaktionspleuel (2) aufweist, das im Gehäuse (3) der Bremse mittels einer Achse (4) gelagert ist, wobei das Pleuel (2) einerseits zwei Stützflächen (14) aufweist, die im wesentlichen radial bezüglich der Trommel (6) ausgerichtet sind, sodaß eine Kraft auf die erste Fläche des Endes des Bandes (1) der Bremse ausgeübt wird und andererseits einen Absatz (8) aufweist, dessen Ebene die Drehachse (10) des Pleuels durchsetzt, sodaß ein Kraftmoment auf die zweite Fläche des Endes des Bandes der Bremse (1) ausgeübt wird.

2. Befestigungsvorrichtung nach Anspruch 1, dadurch gekennzeichnet, daß das Reaktionspleuel (2) aus einer Nabe (11) besteht, die an der Achse (4) angeordnet ist, daß die Nabe (4) durch einen Arm (12) verlängert wird, dessen Ende (13) eine derartige Abschrägung aufweist, daß die Stützfläche (9) des Absatzes (8) gebildet wird.

3. Befestigungsvorrichtung nach Anspruch 2, dadurch gekennzeichnet, daß das Ende (13) des Armes (12) des Reaktionspleuels (2) aus zwei Stützflächen (14) gebildet ist, die beidseits einer Lasche angeordnet sind, welche die Stützflächen (14) nach vorne verlängert, welche den Absatz (8) bilden.

4. Befestigungsvorrichtung nach Anspruch 1, dadurch gekennzeichnet, daß das Reaktionspleuel (2) Positionierzapfen (15) für die Bandbremse aufweist, welche mit Aussparungen (17) zusammenwirken, die an der Bandbremse (1) vorgesehen sind.

5. Befestigungsvorrichtung nach Ansprüchen 2 und 4, dadurch gekennzeichnet, daß die Positinierzapfen (15) in Ausnehmungen (16) angeordnet sind, welche im Arm (12) des Reaktionspleuels (2) vorgesehen sind.

6. Befestigungsvorrichtung nach einem der vorhergehenden Ansprüche, dadurch gekennzeichnet, daß die Bandbremse an einem automatischen Getriebe angeordnet ist und mittels eines Druckzylinders (18) betätigt wird.
